# EUROPEAN PATENT APPLICATION

(11) **EP 2 503 833 A1**
(43) Date of publication of application: **26.09.2012**
(21) Application number: 10791255.2
(22) Date of filing: 22.04.2010
(51) Int. Cl.: H04W 68/00

(54) **PAGING METHOD AND BASE STATION CONTROLLER**

(30) Priority: 19.11.2009 CN 200910237967
(71) Applicant: ZTE Corporation, Shenzhen, Guangdong 518057 (CN)
(72) Inventor: ZHANG, Sigao, Shenzhen Guangdong 518057 (CN)
(74) Representative: Price, Nigel John King
(86) International application number: PCT/CN2010/072079
(87) International publication number: WO 2010/148749

(57) **Abstract**

A paging method and a base station controller are provided to solve the technical problem that the signaling flow of a system or the load of a paging channel is increased due to smaller or larger divisions of a location area. When a paging is initiated at a network side, a mobile switching center performs the paging by using a first location area code; when a paging message reaches the base station controller, the base station controller searches out a second location area code corresponding to a subscriber identification code from a preset location area code mapping table by using the subscriber identification code, and performs the paging by using the second location area code. The paging message is only broadcasted in a cell in which the mobile terminal is located, so that invalid paging messages on an Abis interface are reduced. Furthermore, when the location of the mobile terminal is updated in the same first location area, the base station controller only needs to perform signaling interaction with a base station transceiver, without needing to perform signaling interaction with the mobile switching center at the network side, so that the system signaling flow for location updating is reduced effectively.

## Description

### TECHNICAL FIELD

The disclosure relates to the technical field of communications, and in particular to a paging method and a Base Station Controller (BSC).

### BACKGROUND

With the rapid development of communication technology, the number of subscribers using a Global System for Mobile Communications (GSM) network increases rapidly, and as the number of carrier frequencies carried by a BSC increases, subscriber capacity increases, resulting in the sharp increase of the paging messages.

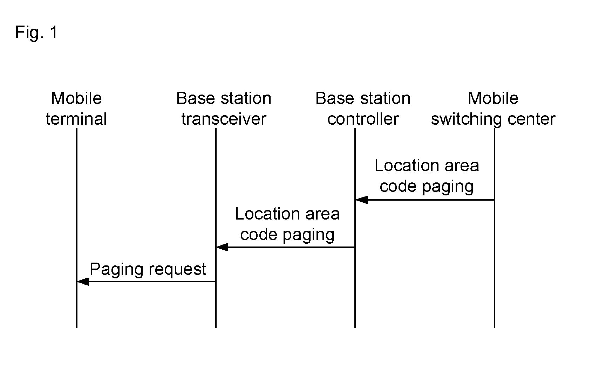

In a cellular wireless communication system, a location area is a minimum unit for terminal location updating and network paging, and can be identified by a Location Area Code (LAC), and the LAC is sent through a system message on each cell broadcast channel. Fig. 1 shows a flow chart of an existing paging method, as shown in Fig. 1, at a Mobile Switching Center (MSC) side, a paging is performed through a paging message according to the location area code, therefore, the planning of the location area is a quite crucial factor in a system. However, following contradictions exist in the process of dividing the location area:
1) if divisions of the location area is smaller, although the flow of the paging message in the system can be reduced effectively, the location updating of the mobile terminal will be increased, thereby increasing the signaling flow of the system; and
2) if divisions of the location area is larger, although the signaling flow for location updating in the system can be greatly reduced, the overload of the paging channel will be caused, and the signaling flow on an Abis interface (a communication interface between a base station controller and a base station transceiver) will also be increased.

Therefore, a compromise is employed for the planning of the location area at present, that is, location updating is reduced as less as possible under the condition that too high paging load is not generated. However, as the compromise is employed for the planning of the location area at present, it is impossible to reduce both the system signaling flow for location updating and the paging flow of the system.

### SUMMARY

In order to solve the above problem, the disclosure aims to provide a paging method and a base station controller, so that the paging efficiency can be taken into consideration during dividing of the location area, thus the system bandwidth resources can be saved effectively.

In order to achieve the above purpose, the disclosure provides a paging method, which includes:
a base station controller receives a paging message based on a first location area code from a network side, wherein the base station controller is located in a first location area, the first location area is provided with the first location area code and is divided into two or more second location areas, and the second location area is provided with a second location area code;
the base station controller extracts a subscriber identification code of a paged mobile terminal from the paging message;
the base station controller searches out the second location area code corresponding to the subscriber identification code of the paged mobile terminal from a preset location area code mapping table according to the subscriber identification code, wherein a corresponding relationship between the subscriber identification code of the mobile terminal and the second location area code of the second location area in which the mobile terminal is located is recorded in the location area code mapping table; and
the base station controller distributes the paging message to the second location area corresponding to the searched second location area code.

Preferably, the method may further include:
when the base station controller receives no paging response message within a predetermined time period, the base station controller distributes the paging message to the second location area corresponding to the searched second location area code again, or distributes the paging message to the first location area again.

Preferably, the method may further include:
the base station controller receives a location update request message from the mobile terminal, wherein the location update request message includes the subscriber identification code of the mobile terminal; and
the base station controller searches out the second location area code of the second location area in which the mobile terminal is located according to an LAPD number of the location update request message, and records a mapping relationship between the subscriber identification code of the mobile terminal sending the location update request message and the searched second location area code of the mobile terminal sending the location update request message.

Preferably, the method may further include:
after sending a location update accept message to the mobile terminal, the base station controller updates the mapping relationship between the subscriber identification code of the mobile terminal sending the location update request message and the searched second location area code of the mobile terminal sending the location update request message in the location area code mapping table.

Preferably, the method may further include:
the time of recording the mapping relationship between the subscriber identification code of the mobile terminal and the second location area code of the mobile terminal in the location area code mapping table is queried; and
when the recording time is beyond the preset time period, the mapping relationship between the subscriber identification code of the mobile terminal and the second location area code of the mobile terminal is deleted from the location area code mapping table.

Preferably, the first location area may include all cells under the same base station controller.

Preferably, the subscriber identification code may be any one of an International Mobile Subscriber Identity (IMSI) and a Temporary Mobile Subscriber Identity (TMSI).

The disclosure further provides a base station controller, which includes:
a receiving module, configured to receive a paging message based on a first location area code from a network side, wherein the base station controller is located in a first location area, the first location area is provided with the first location area code and is divided into two or more second location areas, and the second location area is provided with a second location area code;
an extracting module, configured to extract a subscriber identification code of a paged mobile terminal from the paging message;
a searching module, configured to search out the second location area code corresponding to the subscriber identification code from a preset location area code mapping table according to the subscriber identification code, wherein a corresponding relationship between the subscriber identification code of the mobile terminal and the second location area code of the second location area in which the mobile terminal is located is recorded in the location area code mapping table; and
a sending module, configured to distribute the paging message to the second location area corresponding to the searched second location area code.

Preferably, the base station controller may further include :
an update receiving module, configured to receive a location update request message from the mobile terminal, wherein the location update request message includes the subscriber identification code of the mobile terminal;
an update searching module, configured to search out the second location area code of the second location area in which the mobile terminal is located according to an LAPD number of the location update request message, and record a mapping relationship between the subscriber identification code of the mobile terminal sending the location update request message and the searched second location area code of the mobile terminal sending the location update request message; and
an update recording module, configured to, after sending a location update accept message to the mobile terminal, update the mapping relationship between the subscriber identification code of the mobile terminal sending the location update request message and the searched second location area code of the mobile terminal sending the location update request message in the location area code mapping table.

Preferably, the base station controller may further include:
a setting module, configured to set all cells under the same base station controller to be the first location area, and divide the first location area into two or more second location areas.

It can be seen from the above technical solution, when a paging is initiated at a network side, a mobile switching center performs the paging by using a first location area code; when a paging message reaches a base station controller, the base station controller searches out a second location area code corresponding to the subscriber identification code from a preset location area code mapping table by using the subscriber identification code, and performs the paging by using the second location area code; in this case, the paging message is only broadcasted in a cell in which the mobile terminal is located, invalid paging messages on an Abis interface are reduced, thus the paging efficiency can be taken into consideration during dividing of a location area; furthermore, when the location of the mobile terminal is updated in the same first location area, the base station controller only needs to perform signaling interaction with a base station transceiver, without needing to perform signaling interaction with the mobile switching center at the network side, therefore the system signaling flow for location updating is reduced effectively, and the system bandwidth resources are saved effectively.

### BRIEF DESCRIPTION OF THE DRAWINGS

Fig. 1 shows a flow chart of an existing paging method;
Fig. 2 shows a flow chart of a paging method in an embodiment of the disclosure;
Fig. 3 shows a schematic diagram of a first location area and a second location area in an embodiment of the disclosure;
Fig. 4 shows a flow chart illustrating location updating of a mobile terminal in an embodiment of the disclosure;
Fig. 5 shows a flow chart illustrating maintenance of a location area code mapping table in an embodiment of the disclosure; and
Fig. 6 shows a block diagram illustrating structure of a base station controller in an embodiment of the disclosure.

### DETAILED DESCRIPTION

In embodiments of the disclosure, when a paging is initiated at a network side, a mobile switching center performs the paging by using a first location area code; when a paging message reaches a base station controller, the base station controller searches out a second location area code corresponding to a subscriber identification code from a preset location area code mapping table by using the subscriber identification code, and performs the paging by using the second location area code.

Dividing methods of the first location area codes and second location area codes will be described hereinafter; of course, the dividing methods of first location area codes and second location area codes will not be limited in the embodiment. At present, a Location Area Code (LAC) consists of 16 bytes; LACs with the first N (0<N<16) bytes being identical can be set in a set of the first location area codes, LAC_F represents the first location area code, the value of N can be specifically defined according to network situation, and the value of N can be used to adjust the size of the first location area corresponding to the first location area code, so that a location area can be divided more properly.

For example, when N=10, there are 1024 first location area codes, which are respectively represented as LAC_F0, LAC_F1, LAC_F2, ..., LAC_F1023, wherein
the first location area code LAC_F0 is represented by "0000", and a set of the first location area code LAC_F0 includes second location area codes with values of "0000-003F", wherein each second location area code corresponds to a second location area;
the first location area code LAC_F1 is represented by "0040", and a set of the first location area code LAC_F1 includes second location area codes with values of "0040-007F", wherein each second location area code corresponds to a second location area;
the first location area code LAC_F2 is represented by "0080", and a set of the first location area code LAC_F2 includes second location area codes with values of "0080-00BF", wherein each second location area code corresponds to a second location area;
and the rest can be done in the same manner.

The first location area code LAC-F1023 is represented by "FFCO"; and
the above first location area codes can be used by a core network and saved in the core network, each first location area code includes 64 second location area codes that can be managed by the base station controller.

To make the purpose, technical solution and advantages of the disclosure more clear, the disclosure will be further described in details with reference to embodiments and the drawings hereinafter. Herein, the exemplary embodiments and descriptions of the disclosure are used for explaining the disclosure and are not intended to limit the disclosure.

Application of the paging method in a Global System for Mobile Communications (GSM) will be described as example below; certainly, the embodiment can further be applied in other mobile communication systems, such as Personal Handy Phone System (PHS), Code Division Multiple Access (CDMA) or 3G mobile communication system.

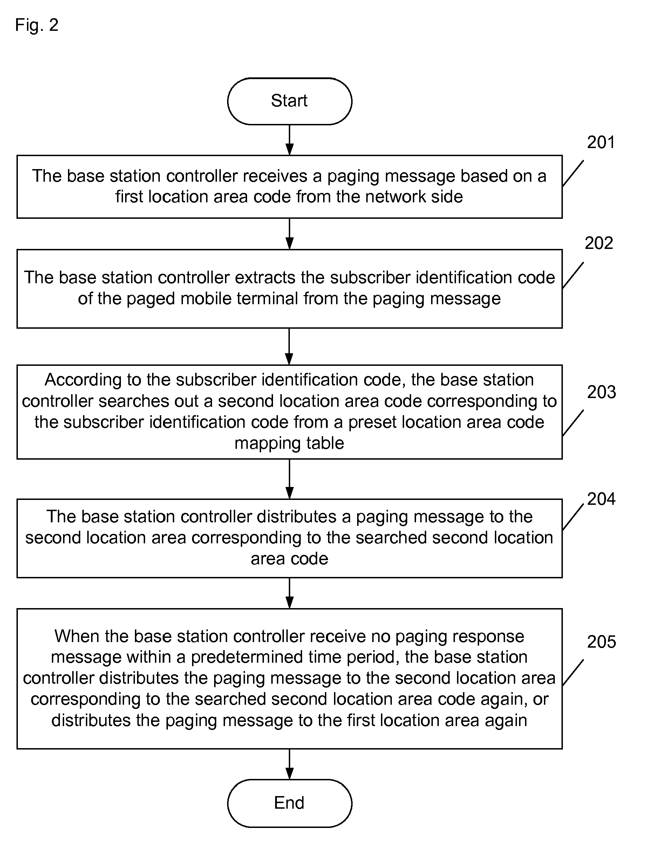

Fig. 2 shows a flow chart of the paging method in the embodiment of the disclosure, specific steps are as follows.

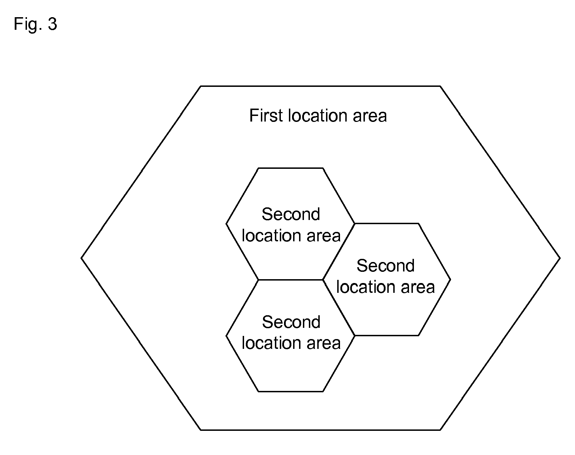

Step 201: a base station controller receives a paging message based on a first location area code from a network side;
the base station controller is located in a first location area that is provided with the first location area code (for example, LAC-F0~LAC_F1023), the first location area is divided into two or more second location areas (for example, the first location area includes 64 second location areas), the second location area is provided with a second location area code, and the relationship between the first location area and the second location areas can refer to Fig. 3.

In this step, the network side pages a mobile terminal located in the first location area; in this case, the network side performs the paging by using the first location area code corresponding to the first location area, and distributes a paging message to the base station controller.

Step 202: the base station controller extracts the subscriber identification code of the paged mobile terminal from the paging message;
the base station controller can obtain the subscriber identification code of the paged mobile terminal by analyzing the paging message.

In the embodiment, the subscriber identification code of the mobile terminal is any one of International Mobile Subscriber Identity (IMSI) and Temporary Mobile Subscriber Identity (TMSI). In the GSM system, a unique IMSI is distributed to each subscriber, and the IMSI is written in the Subscriber Identity Module (SIM) card; while the TMSI is temporarily distributed by the Visitor Location Register (VLR) for an access subscriber after successful authentication.

Step 203: according to the subscriber identification code, the base station controller searches out a second location area code corresponding to the subscriber identification code from a preset location area code mapping table;
in the embodiment, a location area code mapping table for the second location area code and the subscriber identification code can be set in the base station controller, and the mapping relationship between the subscriber identification code of a mobile terminal and the second location area code of the second location area in which the mobile terminal is located is recorded in the location area code mapping table, so that the second location area code corresponding to the subscriber identification code can be searched out from the location area code mapping table through the subscriber identification code.

When the mobile terminal finds that the pre-saved second location area code of the second location area is inconsistent with the second location area code of the second location area in which the mobile terminal is located, the mobile terminal can notify the network side to change location information of the mobile terminal. As location updating flow is generally implemented prior to the service flow, therefore the location update instruction can be used to add or update the mapping relationship in the location area code mapping table.

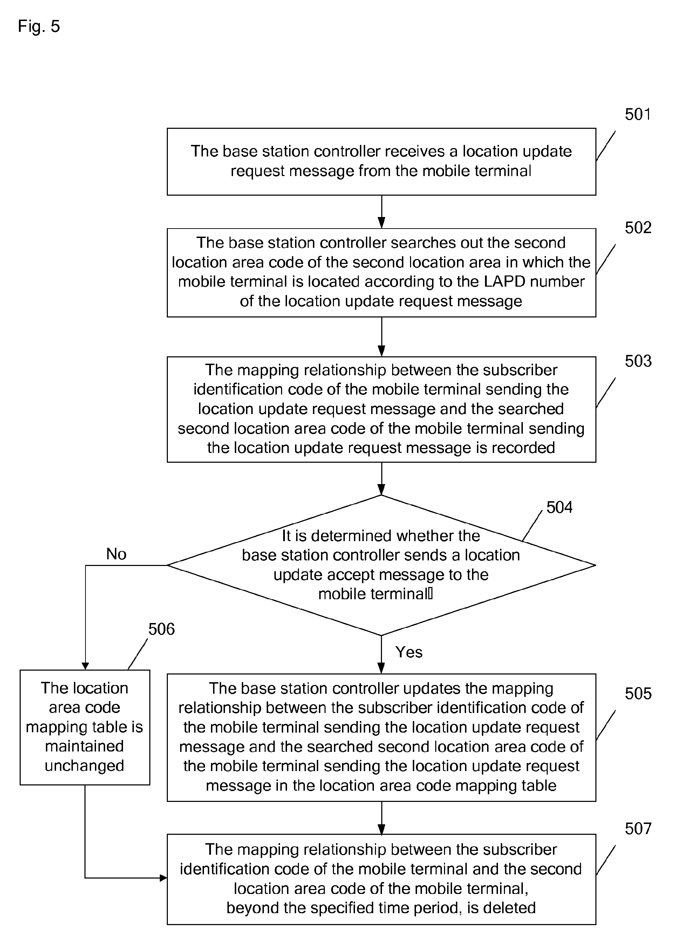

In the embodiment, the mapping relationship can also be sequenced according to the recording time, and the mapping relationship beyond a predetermined time period can be deleted to guarantee the accuracy of the mapping relationship in the location area code mapping table. The flow of increasing or updating the mapping relationship in the location area code mapping table is shown in Fig. 5.

Step 204: the base station controller distributes a paging message to the second location area corresponding to the searched second location area code.

In this step, the base station controller distributes the paging message to the second location area corresponding to the second location area code searched out in step 203, and then the paging message is forwarded to the paged mobile terminal by the base station transceiver, so that sending the paging message to all cells is avoided, invalid paging messages on an Abis interface are reduced effectively, thereby network resources on the Abis interface are saved.

Step 205: if the base station controller receives no paging response message within a predetermined time period, the base station controller distributes the paging message to the second location area corresponding to the searched second location area code again, or distributes the paging message to the first location area again.

For example, a timer may be set, if the base station controller receives no paging response message within a predetermined time period, the paging is performed again by using the second location area code or the first location area code.

It can be seen from the above technical solution that, when a paging is initiated at a network side, a mobile switching center performs the paging by using a first location area code; when a paging message reaches a base station controller, the base station controller searches out a second location area code corresponding to a subscriber identification code from a preset location area code mapping table by using the subscriber identification code, and performs the paging by using the second location area code. In this case, the paging message is only broadcasted in the cell in which a mobile terminal is located and which is under the base station controller, so that invalid paging messages of an Abis interface are reduced, which makes it possible to take the paging efficiency into consideration during dividing of location areas, thereby system bandwidth resources are saved effectively.

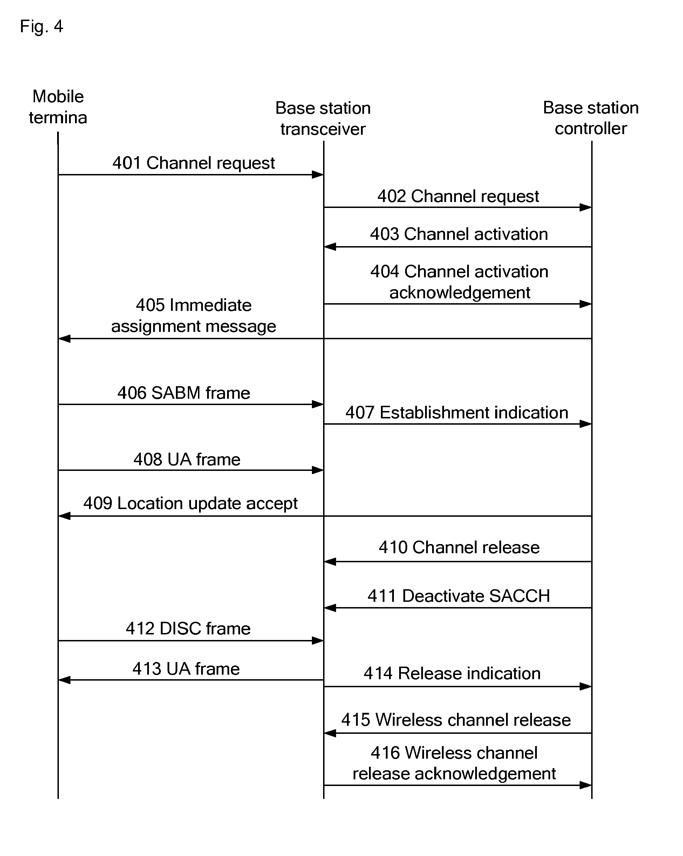

In the embodiment, during dividing of a location area, a first location area is divided into two or more second location areas, therefore, when a mobile terminal moves to a second location area A2 in a first location area A from a second location area A1 in a first location area A, since the location is updated in the same first location area A, the base station controller only needs to interact a simple signaling with the base station transceiver, without needing to perform signaling interaction with the mobile switching center at the network side. Fig. 4 shows a flow chart illustrating location updating of a mobile terminal in an embodiment of the disclosure. The specific steps are as follows:
step 401: a mobile terminal sends a channel request to a base station transceiver;
step 402: the base station transceiver forwards the channel request to a base station controller;
step 403: the base station controller sends a channel activation message to the base station transceiver;
step 404: the base station transceiver sends a channel activation acknowledgement to the base station controller;
step 405: the base station controller sends an immediate assignment message to the mobile terminal;
step 406: the mobile terminal sends a Set Asynchronous Balanced Mode (SABM) frame to the base station transceiver;
step 407: the base station transceiver sends an establishment indication message to the base station controller;
step 408: the mobile terminal sends a UA frame to the base station transceiver;
in steps 406-408, the SABM frame is a message in an LAPDm layer for requesting to establish a connection of a multi-frame response operation mode. After receiving the SABM frame, the system feeds back a UA frame as a response to the SABM frame, indicating that a LAPDm path has been established between the mobile terminal and the system;
step 409: the base station controller sends a location update accept message to the mobile terminal;
step 410: the base station controller sends a channel release message to the base station transceiver, to request the base station transceiver to release the wireless interface logic channel;
step 411: the base station controller sends a Slow Associated Control Channel (SACCH) deactivation message to the base station transceiver, i.e., deactivating the associated control channel;
step 412: the mobile terminal sends to the base station transceiver a DISC frame indicating that the channel has been released;
step 413: the base station transceiver sends a UA frame to the mobile terminal;
step 414: the base station transceiver sends a release instruction to the base station controller;
step 415: the base station controller sends a wireless channel release message to the base station transceiver; and
step 416: the base station transceiver sends a wireless channel release acknowledgement to the base station controller.

It can be seen from steps 401-416 that, no signaling interaction needs to be performed with the mobile switching center in the system in the above flows, therefore it is unnecessary to perform processes such as authentication, encryption, identity identifying, TMSI allocation and the like for the mobile terminal.

In the embodiment, the second location area code of the second location area in which the mobile terminal is located changes, in this case, it is required to update the location area code mapping table.

Fig. 5 shows a flow chart illustrating maintenance of a location area code mapping table in an embodiment of the disclosure. The specific steps are as follows:
step 501: a base station controller receives a location update request message from a mobile terminal;
   the location update request message includes: the second location area code of the second location area in which the mobile terminal is located previously and the subscriber identification code of the mobile terminal;
step 502: a base station controller searches out the second location area code of the second location area in which the mobile terminal is located, according to the LAPD (a control protocol in the data link layer) number of the location update request message;
step 503: the mapping relationship between the subscriber identification code of the mobile terminal sending the location update request message and the searched second location area code of the mobile terminal sending the location update request message is recorded;
   that is, the mapping relationship between the subscriber identification code and the second location area code searched out in step 502 is recorded;
step 504: it is determined whether the base station controller sends a location update accept message to the mobile terminal, if yes, step 505 is executed; otherwise, step 506 is executed;
step 505: the base station controller updates the mapping relationship between the subscriber identification code of the mobile terminal sending the location update request message and the searched second location area code of the mobile terminal sending the location update request message in the location area code mapping table, and then step 507 is executed;
   that is, the mapping relationship recorded in step 503 is updated in the location area code mapping table; in this step, while the mapping relationship is recorded, the time of updating the mapping relationship can also be recorded;
step 506: the location area code mapping table is maintained unchanged, and step 507 is executed; and
step 507: the mapping relationship between the subscriber identification code of the mobile terminal and the second location area code of the mobile terminal, beyond the specified time period, is deleted;
   that is, the time of recording the mapping relationship between the subscriber identification code of the mobile terminal and the second location area code of the mobile terminal in the location area code mapping table is queried; when the recording time is beyond a preset time period, the mapping relationship between the subscriber identification code of the mobile terminal and the second location area code of the mobile terminal in the location area code mapping table is deleted.

In order to implement the above embodiments of the method, other embodiments of the disclosure further provide a base station controller. It should be noted that, as the undermentioned embodiments are provided to implement the aforementioned embodiments of the method, thus modules in the base station controller are set for implementing all steps of the method; however, the disclosure will not be limited to the following embodiments, and any devices and modules that can implement the above method should be included in the protection scope of the disclosure. Besides, in the following descriptions, contents same as those of the method will be ignored herein to make the text more concise.

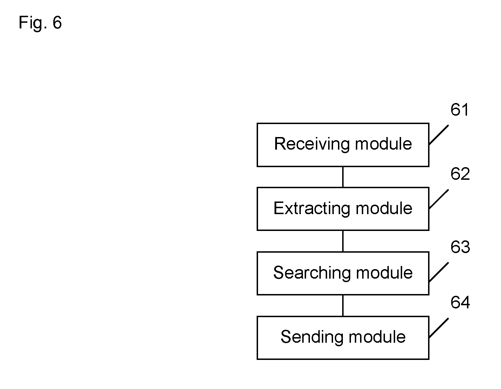

Fig. 6 shows a block diagram illustrating structure of a base station controller in an embodiment of the disclosure. The base station controller includes:
a receiving module 61, configured to receive a paging message based on a first location area code from a network side, wherein the base station controller is located in a first location area, the first location area is provided with the first location area code and is divided into two or more second location areas, and the second location area is provided with a second location area code;
an extracting module 62, configured to extract a subscriber identification code of a paged mobile terminal from the paging message, wherein the subscriber identification code is any one of IMSI and TMSI;
a searching module 63, configured to search out a second location area code corresponding to the subscriber identification code from a preset location area code mapping table according to the subscriber identification code, wherein the corresponding relationship between the subscriber identification code of the mobile terminal and the second location area code of the second location area in which the mobile terminal is located is recorded in the location area code mapping table; and
a sending module 64, configured to distribute the paging message to the second location area corresponding to the searched second location area code.

In another embodiment of the disclosure, the base station further includes:
an update receiving module, configured to receive a location update request message from the mobile terminal, wherein the location update request message includes the subscriber identification code of the mobile terminal;
an update searching module, configured to search out the second location area code of the second location area in which the mobile terminal is located according to the LAPD number of the location update request message, and record the mapping relationship between the subscriber identification code of the mobile terminal sending the location update request message and the searched second location area code of the mobile terminal sending the location update request message; and
an update recording module, configured to, after sending a location update accept message to the mobile terminal, update the mapping relationship between the subscriber identification code of the mobile terminal sending the location update request message and the searched second location area code of the mobile terminal sending the location update request message in the location area code mapping table.

In an embodiment of the disclosure, the base station controller further includes:
a setting module, configured to set all cells under the same base station controller to be the first location area, and divide the first location area into two or more second location areas.

The above are only preferred embodiments of the disclosure. It should be noted that, those skilled in the art can make many improvements and modifications without departing from the principle of the disclosure, and these improvements and modifications shall be within the protection scope of the disclosure.

## Claims

1. A paging method, comprising:
receiving, by a base station controller, a paging message based on a first location area code from a network side, wherein the base station controller is located in a first location area, the first location area is provided with the first location area code and is divided into two or more second location areas, and the second location area is provided with a second location area code;
extracting, by the base station controller, a subscriber identification code of a paged mobile terminal from the paging message;
searching out, by the base station controller, the second location area code corresponding to the subscriber identification code of the paged mobile terminal from a preset location area code mapping table according to the subscriber identification code, wherein a corresponding relationship between the subscriber identification code of the mobile terminal and the second location area code of the second location area in which the mobile terminal is located is recorded in the location area code mapping table; and
distributing the paging message to the second location area corresponding to the searched second location area code by the base station controller.

2. The paging method according to claim 1, further comprising:
distributing the paging message to the second location area corresponding to the searched second location area code again by the base station controller, or distributing the paging message to the first location area again by the base station controller, when the base station controller receives no paging response message within a time predetermined period.

3. The paging method according to claim 1, further comprising:
receiving, by the base station controller, a location update request message from the mobile terminal, wherein the location update request message includes the subscriber identification code of the mobile terminal; and
searching out, by the base station controller, the second location area code of the second location area in which the mobile terminal is located according to an LAPD number of the location update request message, and recording a mapping relationship between the subscriber identification code of the mobile terminal sending the location update request message and the searched second location area code of the mobile terminal sending the location update request message.

4. The paging method according to claim 3, further comprising:
after the base station controller sends a location update accept message to the mobile terminal, updating, by the base station controller, the mapping relationship between the subscriber identification code of the mobile terminal sending the location update request message and the searched second location area code of the mobile terminal sending the location update request message in the location area code mapping table.

5. The paging method according to claim 1, further comprising:
querying the time of recording the mapping relationship between the subscriber identification code of the mobile terminal and the second location area code of the mobile terminal in the location area code mapping table; and
deleting the mapping relationship between the subscriber identification code of the mobile terminal and the second location area code of the mobile terminal from the location area code mapping table when the recording time beyond the preset time period.

6. The paging method according to claim 1, wherein the first location area comprises all cells under the same base station controller.

7. The paging method according to claim 1 or 3, wherein the subscriber identification code is any one of an International Mobile Subscriber Identity (IMSI) and a Temporary Mobile Subscriber Identity (TMSI).

8. A base station controller, comprising:
a receiving module, configured to receive a paging message based on a first location area code from a network side, wherein the base station controller is located in a first location area, the first location area is provided with the first location area code and is divided into two or more second location areas, and the second location area is provided with a second location area code;
an extracting module, configured to extract a subscriber identification code of a paged mobile terminal from the paging message;
a searching module, configured to search out the second location area code corresponding to the subscriber identification code from a preset location area code mapping table according to the subscriber identification code, wherein a corresponding relationship between the subscriber identification code of the mobile terminal and the second location area code of the second location area in which the mobile terminal is located is recorded in the location area code mapping table; and
a sending module, configured to distribute the paging message to the second location area corresponding to the searched second location area code.

9. The base station controller according to claim 8, further comprising:
an update receiving module, configured to receive a location update request message from the mobile terminal, wherein the location update request message comprises the subscriber identification code of the mobile terminal;
an update searching module, configured to search out the second location area code of the second location area in which the mobile terminal is located according to an LAPD number of the location update request message, and record a mapping relationship between the subscriber identification code of the mobile terminal sending the location update request message and the searched second location area code of the mobile terminal sending the location update request message; and
an update recording module, configured to, after sending a location update accept message to the mobile terminal, update the mapping relationship between the subscriber identification code of the mobile terminal sending the location update request message and the searched second location area code of the mobile terminal sending the location update request message in the location area code mapping table.

10. The base station controller according to claim 8, further comprising:
a setting module, configured to set all cells under the same base station controller to be the first location area, and divide the first location area into two or more second location areas.
